# EUROPÄISCHE PATENTSCHRIFT

(11) **EP 3 169 549 B1**
(45) Veröffentlichungstag und Bekanntmachung des Hinweises auf die Patenterteilung: **13.03.2019**
(21) Anmeldenummer: 15723707.4
(22) Anmeldetag: 21.05.2015
(51) Int. Cl.: B60R 11/04, B60S 1/08, B60S 1/56

(54) **KAMERAEINHEIT FÜR KRAFTFAHRZEUGE**
CAMERA UNIT FOR MOTOR VEHICLES
UNITÉ DE CAMÉRA POUR VÉHICULES AUTOMOBILES

(30) Priorität: 14.07.2014 DE 102014109847; 24.07.2014 DE 102014110468
(43) Veröffentlichungstag der Anmeldung: 24.05.2017
(73) Patentinhaber: Huf Hülsbeck & Fürst GmbH & Co. KG, 42551 Velbert (DE)
(72) Erfinder: BARTHEL, Joachim, 45329 Essen (DE)
(74) Vertreter: Zenz Patentanwälte Partnerschaft mbB
(86) Internationale Anmeldenummer: PCT/EP2015/061192
(87) Internationale Veröffentlichungsnummer: WO 2016/008618

(56) Entgegenhaltungen:
- EP-A2- 1 332 923
- WO-A2-2004/047421
- DE-A1-102008 008 656
- DE-A1-102010 007 850
- JP-A- H11 245 729

## Beschreibung

Die Erfindung betrifft eine Kameraeinheit zum Einsatz an Kraftfahrzeugen. Insbesondere betrifft die Erfindung eine Kameraeinheit, die in einem Durchbruch einer Außenverkleidung eines Fahrzeugs im Heckbereich anzuordnen ist, um das heckseitige Umfeld eines Fahrzeugs, insbesondere den nachfolgenden Verkehr oder Hindernisse beim Einparkvorgang zu überwachen.

Kameras zur Überwachung des Umfelds von Fahrzeugen sind im Stand der Technik bekannt. Beispielsweise offenbart die WO 2012/037930 eine Kameraeinheit der eingangs genannten Art. Die dort gezeigte Kameraeinheit ist mit einem Schutzelement ausgestattet, welches die Kamera bedeckt und schützt, wenn sich diese in einem Ruhezustand befindet. Soll der Heckbereich, beispielsweise für einen Einparkvorgang oder während des Rückwärtsfahrens überwacht werden, kann die Abdeckung der Kamera verschwenken und die Kamera in eine Aufnahmeposition gebracht werden. Sowohl die Schutzabdeckung als auch die Kamera selbst können also unterschiedliche Stellungen einnehmen, je nach gewähltem Betriebsmodus. Auch Kameras die fixiert am Fahrzeug angebracht sind und freiliegende Kameras sind im Stand der Technik bekannt. Die DE 10 2010 007 850 offenbart eine Kameraanordnung, die ein zugehöriges Reinigungssystem aufweist.

Die DE 10 2012 020 295 offenbart eine Kamera, ebenfalls mit einem Reinigungssystem. Aus der WO 2014/086760 ist ein Verfahren bekannt, um eine Diagnose der Verschmutzung einer Kameraeinrichtung vorzunehmen und in Abhängigkeit von dem Ergebnis der Auswertung von Bildverarbeitungssignalen eine Reinigungseinrichtung anzusteuern.

Die DE 10 2008 008656 A1, die den Oberbegriff des Anspruchs 1 bildet, offenbart ein Kamerasystem für ein Kraftfahrzeug mit einer drehbar gelagerten Kameraeinheit, die ein optisches Element aufweist und über einen Motor in eine Ruheposition und in eine aktive Position bringbar ist. Ein Schutzelement kann in einer Schließstellung die Kameraeinheit in ihrer Ruheposition abschirmen und eine Reinigungseinheit ist zur Säuberung des optischen Elements vorgesehen.

Aufgabe der Erfindung ist es, eine Kameraeinrichtung mit verbessertem Nutzwert und verbesserter Zuverlässigkeit zu schaffen.

Diese Aufgabe wird durch eine Kameraeinrichtung gemäß Patentanspruch 1 gelöst.

Die erfindungsgemäße Kameraeinheit weist ein Trägergehäuse auf und eine damit verbundene Antriebseinheit. An dem Trägergehäuse ist eine Schutzabdeckung bewegbar angeordnet und in dem Trägergehäuse ist eine Kamera aufgenommen, die zwischen verschiedenen Stellungen mit Hilfe der Antriebseinheit bewegbar ist.

Trägergehäuse, Antriebseinheit, Kamera und Schutzabdeckung bilden ein Modul oder eine Baueinheit, die bei einem Fahrzeug in den Durchbruch einer Außenverkleidung einsetzbar ist und in kompakter und ästhetischer Weise integriert wird. Die Antriebseinheit weist z.B. einen ansteuerbaren Elektromotor oder ein sonstiges Stellglied auf, welches z.B. mit einem Getriebe zur Veränderung der Kameraposition gekoppelt sein kann, um die Kamera in das Trägergehäuse hineinzuziehen oder aus dem Trägergehäuse herauszufahren.

Diesbezügliche technische Lösungen sind bekannt, wobei die Trajektorie der Kamera linear sein kann oder einen komplexeren Verlauf nehmen kann. Die Kamera kann dazu beispielsweise mit entsprechenden Führungsmitteln und zugehöriger Kulisse gekoppelt sein, um eine Längsbewegung zu vollziehen und ggf. auch eine kombinierte Schwenkbewegung, um in einem Bewegungsabschnitt entlang der Bewegungsbahn die Sicht beispielsweise auf den Bodenbereich hinter dem Fahrzeug zu ermöglichen. Für eine diesbezüglich mögliche Gestaltung wird auf die eingangs bereits genannte WO 2012/037930 verwiesen. Eine andere Gestaltung zeigen beispielsweise die EP 2 018 297 A1 oder auch die EP 2 054 572 A1. Auf diese Dokumente wird hinsichtlich der Möglichkeiten zur Ausbildung eines Antriebs und einer Bewegungsbahn einer Kamera mit Schutzabdeckung ausdrücklich Bezug genommen.

Bei der erfindungsgemäßen Kameraeinheit kann sich die Kamera in einer ersten Position befinden, während sich die Schutzabdeckung ebenfalls in einer ersten Schutzabdeckungsstellung befindet. Diese ersten Stellungen beider Elemente können beispielsweise die Ruhestellungen sein, wenn die Kameraeinheit nicht zur Aufnahme von Umgebungsbildern des Heckbereichs angesteuert wird.

Die Kameraeinheit kann in dieser ersten Stellung in das Trägergehäuse zurückgezogen sein und von der Schutzabdeckung beabstandet sein. Die Schutzabdeckung liegt dann beispielsweise am Trägergehäuse an oder bedeckt dieses jedenfalls gegenüber unmittelbar einwirkenden Umgebungseinflüssen. Unter Bedeckung der Kamera durch die Schutzabdeckung ist in diesem Zusammenhang zu verstehen, dass ein unmittelbarer Zugang zur Kamera abgedeckt wird, so dass diese beispielsweise vor Steinschlag und unmittelbar auftreffenden Flüssigkeiten oder Schmutz geschützt ist. Die Schutzabdeckung überdeckt also jedenfalls zu wesentlichen Teilen den Sichtbereich der Kamera und die Sichtlinien von der Kamera aus in die Umgebung.

Die Kamera kann durch Ansteuerung des Antriebs in eine zweite Stellung gebracht werden und auch die Schutzabdeckung kann in eine zweite Schutzabdeckungsstellung gebracht werden. In dieser Stellung hat die Kamera freie Sicht zumindest auf einen Bereich der Umgebung. Beispielsweise schwenkt oder dreht die Schutzabdeckung gegenüber dem Trägergehäuse derart weg, dass die Kamera aus dem Trägergehäuse durch den Antrieb ein Stück herausgeschoben und ggf. geschwenkt werden kann. Auf diese Weise sieht die Kamera beispielsweise auf den Bodenbereich hinter dem Fahrzeug unter der Schutzabdeckung hindurch also an dieser vorbei. Die Schutzabdeckung muss dabei nicht unbedingt mit dem Antrieb selbst unmittelbar gekoppelt sein. Die Schutzabdeckung kann auch von der Kamera, die wiederum mit der Antriebseinheit gekoppelt ist, aus der ersten in die zweite Stellung gedrängt werden oder verschoben werden. Hierbei kann die Schutzabdeckung auch eine Federvorspannung aufweisen, welche die Schutzabdeckung in die erste, abdeckende Schutzstellung bewegt, wenn keine überkompensierende Kraft auf die Schutzabdeckung einwirkt und diese in die zweite Stellung bringt.

Als wesentliches Element ist erfindungsgemäß in oder an der Kameraeinheit eine Fluidverteilungseinrichtung angeordnet, die zumindest einen Fluidauslass zum Ausstoßen eines Fluides in Richtung der Kamera aufweist. Unter Fluid sind in diesem Zusammenhang alle Arten von Flüssigkeiten oder Gasen zu verstehen, welche zur Reinigung einer Kamera an einem Fahrzeug im Betriebszustand geeignet sind. Üblicherweise können dies wässrige oder auch alkoholische Lösungen und insbesondere Lösungen mit Reinigungsmittelzusatz sein. Alternativ oder zusätzlich können auch Gase, ggf. unter Druck auf die Kamera aufgebracht werden.

Wesentlich ist, dass diese Fluidverteilungseinrichtungen einen Fluidauslass aufweist, der unter der Schutzabdeckung, also zwischen Schutzabdeckung und Kamera angeordnet ist. Auf diese Weise werden die Vorteile einerseits der geschützten Abdeckung der Kamera mit den Vorteilen einer im Betrieb zu reinigenden Kamera kombiniert. Die Reinigung kann erfolgen, auch wenn sich die Kamera unter der Schutzabdeckung befindet, also insbesondere in der Ruhestellung der Kamera. Als zusätzlicher Nutzen ergibt sich, dass die Umgebung im Heckbereich, beispielsweise ein sich dort aufhaltender Passant, dem Ausstoß der Reinigungslösung nicht ausgesetzt wird da sich die Schutzabdeckung über dem Fluidauslass befindet.

Fluidauslass und damit Fluidverteilungseinrichtung können an das fahrzeugseitige Fluidsystem zur Reinigung von Scheiben oder Leuchten angeschlossen sein, es kann grundsätzlich jedoch auch ein eigenes Reservoir von Fluid bereitgestellt werden. Es ist schließlich auch möglich, dass die Fluidverteilungseinrichtung zusätzlich zu dem Fluidauslass über eine Einrichtung zur Kompression von Umgebungsluft oder auch ein Gasreservoir verfügt, um ein Ausblasen des Kamerabereichs zu ermöglichen.

Die Ansteuerung der Fluidverteilungseinrichtung kann zusammen mit den Reinigungseinrichtungen des übrigen Fahrzeugs manuell, durch Benutzerbetätigung oder in Abhängigkeit von automatisiert ablaufenden Vorgängen beispielsweise periodisch erfolgen. Es ist außerdem möglich, ein Bildverarbeitungssystem mit den Daten der Kamera zu versorgen, wie in der WO 2014/086760 offenbart. Dort wird eine automatisierte Auswertung der Bilddaten einer Kamera vorgenommen, um fahrzeugseitig zu entscheiden, ob eine Reinigung der Einrichtung geboten ist. Eine derartige Diagnose kann beispielsweise beim Fahrzeugstart, periodisch oder bei Auswahl einer Kamerafunktion durchgeführt werden.

Das eingebrachte Fluid kann aus dem Trägergehäuse entweder durch einen dort angebrachten Ablauf aus dem Fahrzeugraum abgeleitet werden, oder es läuft zwischen Trägergehäuse und Schutzabdeckung nach hinten aus dem Fahrzeug heraus.

Die Reinigung einer solchen erfindungsgemäßen Kameraeinheit braucht nur deutlich seltener zu erfolgen als beispielsweise einer Kameraeinheit, wie sie in der vorstehend genannten DE 10 2010 007 850 offenbart ist. Eine jederzeit freiliegende Kamera ist wesentlich stärkeren Verschmutzungseffekten ausgesetzt als eine erfindungsgemäße, durch eine Schutzabdeckung bedeckte Kamera. Dennoch optimiert eine derartige Reinigungseinrichtung den Nutzeffekt und sorgt jederzeit für eine sichere und vollständige Sicht in den Heckbereich des Fahrzeugs.

In einer vorzugsweisen Gestaltung der Erfindung weist die Schutzabdeckung einen transparenten Bereich auf oder ist vollständig transparent ausgebildet. So ist es möglich, auch bei geschlossener Schutzabdeckung Teile der äußeren Umgebung im Heckbereich bei gleichzeitigem Schutz der Kamera zu erfassen. Dennoch ist die Schutzabdeckung bewegbar, insbesondere um den Winkel der Kamera gegenüber dem Trägergehäuse, beispielsweise zum Überprüfen und Erfassen eines Bodenbereichs zu bewegen.

Gemäß einer Weiterbildung der Erfindung ist die Kamera zur Einnahme einer dritten Kamerastellung ausgebildet. In dieser dritten Kamerastellung, in welche die Kamera ebenfalls über die Antriebseinheit gefahren wird, ist die Kamera der Schutzabdeckung angenähert. Durch den transparenten Bereich in der Schutzabdeckung kann die Kamera auf diese Weise einen großen Bereich hinter dem Heck erfassen und wird dennoch durch die Schutzabdeckung geschützt.

Die dritte Stellung der Kamera, angenähert an die transparente Schutzabdeckung ist insbesondere vorgesehen, um den Heckbereich auch während der Fahrt des Fahrzeugs zu überwachen ist. Dies ist beispielsweise bei sogenannten Pre-Crash-Systemen sinnvoll, die während des Betriebs des Fahrzeuges den nachfolgenden Verkehr überwachen und bei unnatürlich rascher Annäherung eines weiteren Fahrzeugs den Fahrzeuginnenraum auf einen Auffahrunfall vorbereiten, beispielsweise durch Anpassung der Sitzposition oder Straffung der Sitzgurte. Derartige Pre-Crash-Systeme sind bekannt und die erfindungsgemäße Einrichtung sorgt mit der Möglichkeit der Reinigung im geschlossenen Zustand der Schutzabdeckung für eine sicherere und verlässlichere Ausführung derartiger Verfahren, die auf hochwertige Bilddaten aus dem Heckbereich angewiesen sind. In einer solchen Gestaltung kann die Kameraeinheit also eine erste Position mit geschlossener Schutzabdeckung aufweisen, in welcher die Kamera erfindungsgemäß zu reinigen ist. Eine zweite Stellung bedingt die Verstellung der Kamera und die Verstellung der Schutzabdeckung, um einen Bereich hinter dem Fahrzeug zu erfassen. Die sogenannte Pre-Crash-Stellung kann identisch zu der ersten Stellung sein, in welcher die Kamera durch die Schutzabdeckung hindurch den nachfolgenden Verkehr aufnimmt, es kann jedoch auch eine von der ersten und zweiten Stellung veränderte dritte Stellung der Kamera sein, in welcher die Kamera gegenüber der Schutzabdeckung angenähert ist, um ein besseres Sichtfeld durch die Schutzabdeckung hindurch zu erhalten.

In einer bevorzugten Ausführungsform der Erfindung wird als Fluid eine wässrige Lösung, Druckluft oder ein Gemisch aus beidem auf die Kamera gespritzt. Derartige Substanzen sind hinsichtlich der Umweltverträglichkeit und Gefährdungspotenzial am Fahrzeug zu bevorzugen. Die Kombination einer wässrigen Lösung und einer Druckbeaufschlagung des Fluidstrahls hilft durch sowohl Lösungseffekte und mechanische Effekte eine Reinigung der Kamera herbeizuführen. Die Druckluft kann mit der Fluidverteilungseinrichtung selbst erzeugt werden, beispielsweise indem ein kleiner Kompressor vorgesehen wird, sie kann allerdings auch einer Druckluftkartusche entnommen werden die bei Inspektionen zu erneuern oder nachzufüllen ist. Es ist schließlich auch möglich, die Druckluft von einem anderen Kraftfahrzeugbereich zuzuführen, sofern dort Druckluft beispielsweise in pneumatischen Systemen anfällt. Beispielsweise könnten ggf. pneumatische Systeme im Bereich der Fahrwerksaufhängung und der Federung angeordnet werden, so dass ein Freiblasen der Kameraeinrichtung kontinuierlich und regelmäßig erfolgt, nämlich bei Federung des Fahrzeugs im Zuge einer Fahrt und entsprechender Auslenkung der zugehörigen pneumatischen Systeme, z.B. Pneumatikzylinder.

Erfindungsgemäß weist die Kameraeinrichtung mehrere Fluidauslässe auf, die zum Ausstoß von Fluid in verschiedene Richtungen orientiert sind oder auch den Ausstoß unterschiedlicher Medien aus unterschiedlichen Auslässen erlauben.

Beispielsweise können mehrere Fluidauslässe nebeneinander angeordnet sein, um zeitversetzt oder gleichzeitig unterschiedliche Substanzen und Komponenten als Fluid auf die Kamera aufzubringen. Die Kamera kann so z.B. nach einer Feuchtreinigung trockengeblasen werden. In einer bevorzugten Gestaltung ist jedoch eine der weiteren Fluidverteilungseinrichtungen auf die Innenseite der Schutzabdeckung, dort insbesondere auf den transparenten Bereich gerichtet. Mit diesem Fluidauslass wird also die Innenseite der Schutzabdeckung mit einem Reinigungsfluid besprüht, so dass sowohl Kamera als auch Innenseite der Schutzabdeckung jederzeit eine freie Sicht der Kamera auf das rückwertige Umfeld erlauben. Dabei ist der Begriff Fluidauslass so zu verstehen, dass auch beispielsweise eine Düsenanordnung mit zwei Auslassöffnungen in unterschiedliche Richtungen vorgesehen sein kann. Entsprechende Systeme sind von Scheibenreinigungseinrichtungen hinlänglich bekannt. Es kann sich auch um einstellbare oder schwenkbare Düsenanordnungen handeln.

In einer besonders bevorzugten Ausführungsform ist ein Fluidauslass so angeordnet, dass er auf die Außenseite der Schutzabdeckung gerichtet ist. Dieser Fluidauslass ist zusätzlich zu demjenigen vorgesehen, der zwischen Schutzabdeckung und Kamera zur Reinigung der Kamera angeordnet ist. Die Außenseite der Schutzabdeckung ist naturgemäß den intensivsten Einwirkungen von Umgebungseinflüssen ausgesetzt, beispielsweise Schneematsch, Salz, Schmutz, Regen etc. Andererseits wird die Außenseite der Schutzabdeckung als von außen zugänglicher Bereich auch regelmäßigen Reinigungen zusammen mit dem Fahrzeug unterzogen oder auch teilweise durch Regen sauber gespült. Die zusätzliche Anordnung eines Fluidauslasses in diesem Bereich sorgt dafür, dass der von der Kamera durchblickte Bereich, also der transparente Bereich der Schutzabdeckung ebenfalls einer bedarfsmäßigen äußeren Reinigung unterzogen wird. Es ist dabei vorgesehen, dass sämtliche der genannten Fluidauslässe an einem einheitlichen Fluidsystem gekoppelt sein können oder auch getrennt ansteuerbar sein können.

In einer besonders bevorzugten Ausführungsform der Erfindung ist die Schutzabdeckung schwenkbar gegenüber dem Träger ausgebildet und der Fluidauslass zur Außenreinigung der Schutzabdeckung ist derart angeordnet, dass er auf einen Bereich zielt, in welchem sich der von der Kamera durchblickte Bereich in aufgeschwenktem Zustand der Schutzabdeckung befindet. Dies ist vorteilhaft, weil regelmäßig beim Ausschwenken der Schutzabdeckung ein weniger steiler Winkel hinsichtlich der Einwirkung des Fluidstrahles oder Fluidnebels sichergestellt werden kann. Wird beispielsweise die Schutzabdeckung nach oben verschwenkt, so dass die Kamera darunter vorbei den Bodenbereich aufnehmen kann, so kann eine oberhalb der Schutzabdeckung angeordnete Düse in einem vorteilhafteren Winkel auf die Schutzabdeckung in aufgeschwenkter Stellung sprühen. Dies wird anhand der unten erläuterten Beispiele deutlicher.

Gemäß einer Weiterbildung der Erfindung integriert die Kameraeinrichtung nicht nur eine Schutzabdeckung, die Schutzabdeckung selbst weist außerdem noch die Zusatzfunktion einer Handhabe für eine Klappe, insbesondere Kofferraumklappe auf. Eine derartige Kameraeinheit dient dann in ästhetischer und praktischer Weise sowohl als abgedeckte Kameraeinrichtung als auch als Griffeinrichtung und Handhabeeinrichtung für die Betätigung der Heckklappe. Zur Betätigung kann ein Benutzer an die Handhabe angreifen und diese gegen den Träger verschwenken. Die verschwenkte Handhabe betätigt beispielsweise einen Mikroschalter oder löst mechanisch einen Öffnungsmechanismus der Kofferraumklappe aus.

In einer Abwandlung der Erfindung kann die Schutzabdeckung auch mit einem Zierelement, beispielsweise einem Herstelleremblem versehen sein.

Außerdem kann die Handhabe auch weitere Funktionselemente, insbesondere Beleuchtungselemente und Vorfeldbeleuchtungen aufweisen.

Die Erfindung wird nun anhand der beiliegenden Zeichnungen näher erläutert.
Figur 1a zeigt ein Beispiel einer Kameraeinheit in perspektivischer Schrägansicht.
Figur 1b zeigt das Beispiel aus Figur 1a in einer Seitenansicht.
Figur 1c zeigt das Beispiel aus Figur 1b in einer Schnittansicht.
Figur 2a zeigt das Beispiel mit teildemontierter Schutzabdeckung in einer Schrägansicht.
Figur 2b zeigt die Anordnung aus Figur 2a in einer Draufsicht.
Figur 3a zeigt die Anordnung gemäß erstem Beispiel mit entfernter Schutzabdeckung in einer Schrägansicht.
Figur 3b zeigt die Anordnung aus Figur 3a in einer Aufsicht.
Figur 4 zeigt ein erstes Ausführungsbeispiel der Erfindung mit entfernter Schutzabdeckung in einer Schrägansicht.
Figur 5a zeigt die erste Ausführungsform mit ausgeschwenkter und montierter Schutzabdeckung.
Figur 5b zeigt die Anordnung aus Figur 5b in einer anderen Schrägansicht.
Figur 6a zeigt ein zweites Ausführungsbeispiel der Erfindung mit separater Anordnung eines zweiten Fluidausstoßes.
Figur 6b zeigt die zweite Ausführungsform in einer anderen Schrägansicht.

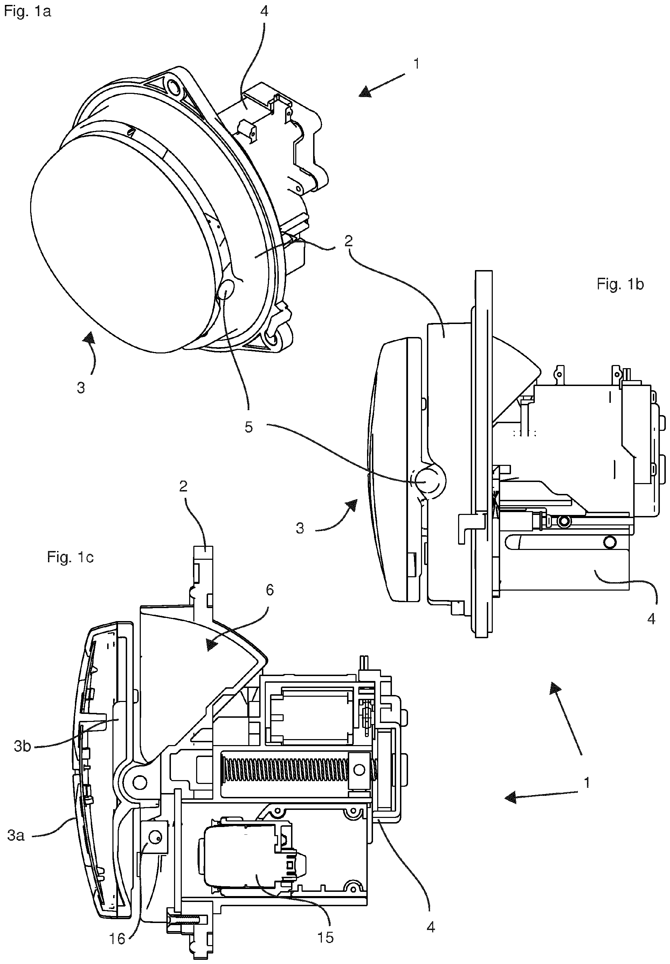

Die Figuren 1a, 1b und 1c zeigen eine Kameraeinrichtung (1). Ein Gehäuseträger (2) trägt eine Schutzabdeckung (3). An dem Gehäuseträger (2) ist eine Antriebseinheit (4) montiert. Die Anordnung ist mit dem Gehäuseträger (2) derart in einer Ausnehmung eines Fahrzeugaußenblechs (nicht dargestellt) anzuordnen, dass die Schutzabdeckung (3) den Außenbereich des Fahrzeugs ragt und die Antriebseinheit (4) im Inneren des Fahrzeugs aufgenommen ist.

Mit der Antriebseinheit (4) sind Kopplungsmittel in Gestalt von Kabeln (nicht dargestellt) verbunden, um eine Energieversorgung und eine Ansteuerung der Antriebseinheit zu ermöglichen. Diese Kabel können mit dem Kabelbaum des Fahrzeugs gekoppelt werden.

In dem gezeigten Beispiel ist die Schutzabdeckung (3) in einem Schwenklager (5) an dem Gehäuseträger (2) befestigt. Wie in Figur 1c in einer Schnittansicht durch die Mittelebene der Anordnung erkennbar, ist in dem Trägergehäuse (2) ein freier Raum ausgebildet, in welchen die Schutzabdeckung (3) bei einem Verschwenken um die Schwenkachse (5) mit ihrer oberen Hälfte hineinschwenken kann. Es ist außerdem gezeigt, dass die Schutzabdeckung (3) in diesem Beispiel mehrteilig ausgebildet ist, insbesondere um zusätzliche Leuchtelemente (10) und Zierkomponenten aufzunehmen. Außerdem ist in der Schnittansicht 1c die Kamera (15) dargestellt, welche mit der Antriebseinheit (4) zur Verstellung gekoppelt ist. Auch die Düse eines Fluidauslasses (16) ist in der Schnittansicht freigelegt, welche auf die Kamera in der dargestellten Position ausgerichtet ist. Die Kamera (15) nimmt in dieser Darstellung eine erste Position ein, in welcher sie von der Schutzabdeckung (3), die sich ebenfalls in der ersten Schutzabdeckungsposition befindet, gegenüber Umwelteinflüssen weitgehend abgeschirmt wird.

In dieser Stellung kann aus dem Fluidauslass (16) durch Druckaufbau in einem nachgeschalteten Fluidsystem eine Reinigungsflüssigkeit, beispielsweise die übliche Scheibenwischflüssigkeit ausgestoßen werden und diese trifft auf die Frontseite der Kamera, insbesondere die Linsenordnung der Kamera.

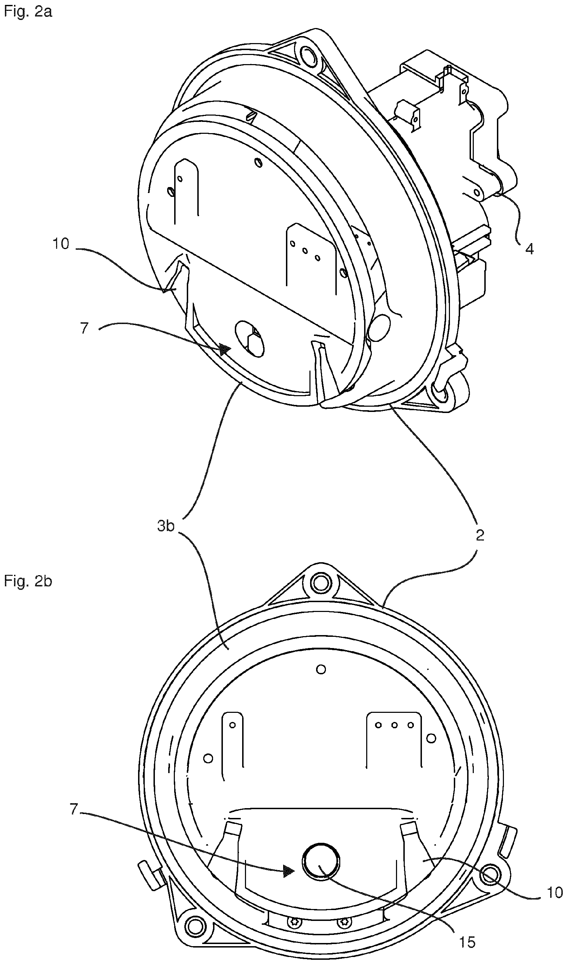

Die Figuren 1a, 1b und 1c zeigen die Schutzabdeckung (3) mehrteilig, die genaue Struktur wird jedoch besser aus den Figuren 2a und 2b deutlich. In diesen ist die transparente Frontseite (3a) der Schutzabdeckung demontiert. Dies gibt den Blick auf einen Schutzabdeckungsträger (3b) frei, in dem beispielsweise Aussparungen für Beleuchtungseinrichtungen (10) mit zugehörigen Schaltungskomponenten vorgesehen sind. Außerdem ist in dem Schutzabdeckungsträger (3b) eine Öffnung (7) ausgebildet, durch welche die Kamera aus dem Inneren des Trägers in den Außenbereich filmen kann, da sich vor der Öffnung im Betriebsfalle nur noch die transparente Abdeckung (3a) befindet. Die Figur 2b zeigt die Anordnung aus Figur 2a in einer anderen Perspektive und gibt den Blick durch die Öffnung (7) auf die Kamera (15) frei.

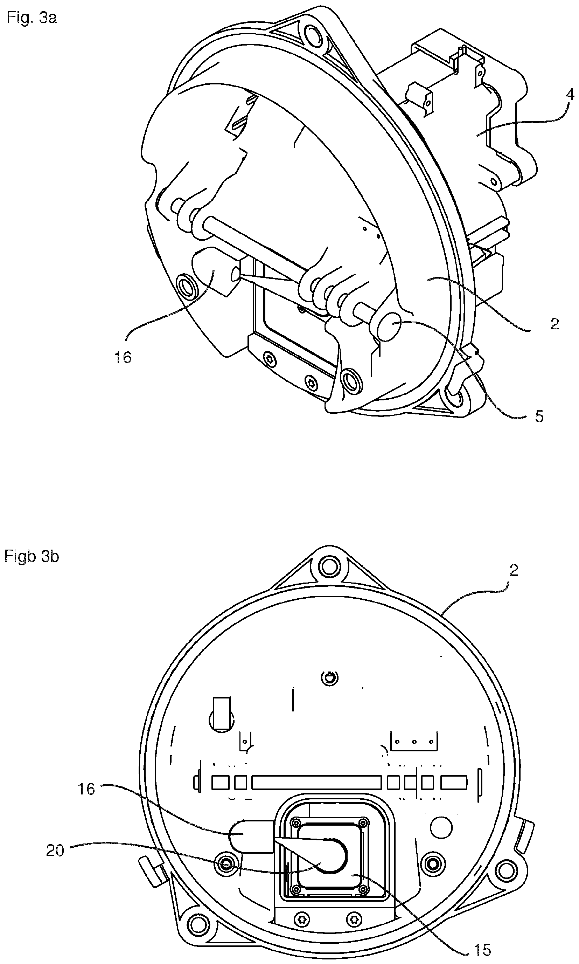

In der Figur 3a ist die Schutzabdeckung (3) vollständig demontiert, so dass ein Blick auf das Schwenklager (5) freigegeben wird sowie den Fluidausstoß (16), der in dieser Darstellung einen Flüssigkeitsstrahl (20) auf die Kamera (15) ausstößt. Der Fluidausstoß (16) ist entsprechend hinter der Schutzabdeckung (3) angeordnet und selbst geschützt vor Umwelteinflüssen. Außerdem wird der Flüssigkeitsstrahl (20) gegenüber der äußeren Umgebung abgeschirmt, so dass eine Störung der Umgebung oder eine unbeabsichtigte Benetzung oder Beschmutzung von nahestehenden Personen oder der übrigen Karosserie vermieden wird.

Im unteren Bereich des Trägergehäuses (2) ist eine Aussparung ausgebildet, um die aufgebrachte Flüssigkeit nach Abtropfen von der Kamera aus dem Gehäuse auslaufen zu lassen. Die Kamera selbst kann durch einen elastischen Faltenbalg gegen das übrige Trägergehäuse gedichtet sein, so dass kein Fluid in den Bereich seitlich der Kamera oder hinter der Kamera im Fahrzeuginneren vordringen kann.

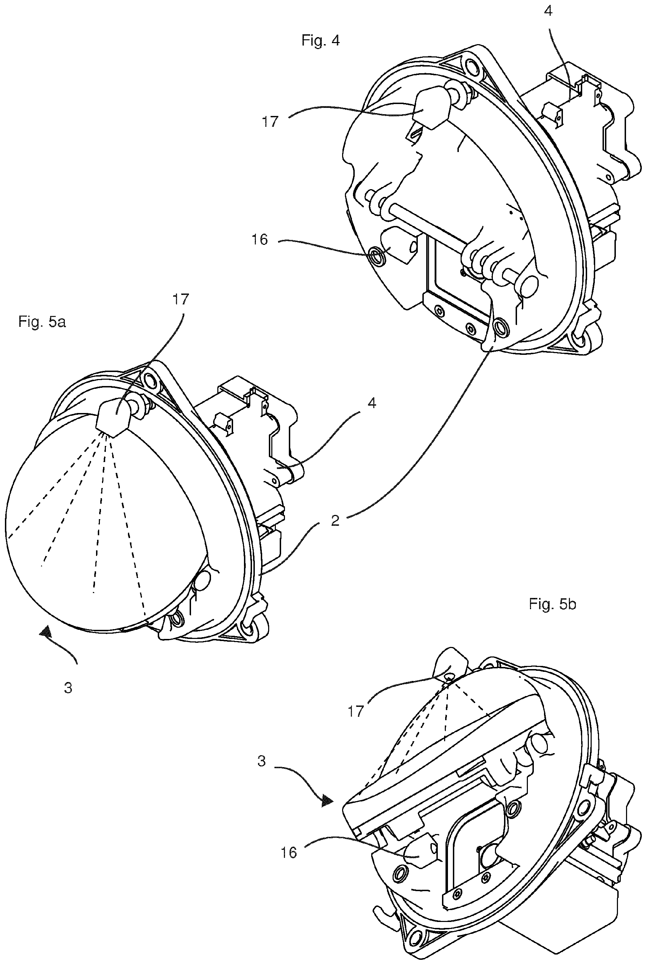

Die Figur 4 zeigt eine erste Ausführungsform der Einrichtung, wobei ein weiterer Fluidauslass (17) an der Oberseite des Trägergehäuses (2) angeordnet ist. Dieser Fluidauslass (17) ist entsprechend nicht zwischen der Schutzabdeckung (3) und der Kamera angeordnet, sondern ist so angeordnet, dass er die Außenseite der Schutzabdeckung (3) mit einem Fluid beaufschlagen oder benetzen kann. Dies wird in den Figuren 5a und 5b dargestellt, aus welchen hervorgeht, dass die Eindüsung eines Fluides über den Fluidauslass (17) in der geschwenkten Stellung der Schutzabdeckung (3) den unteren Bereich der Schutzabdeckung, durch welchen die Kamera auf die Außenseite blicken kann, reinigt. Die Reinigung der Außenseite der Schutzabdeckung kann unabhängig von der Reinigung der Kamera selbst erfolgen oder auch jederzeit zeitgleich ausgelöst werden.

Wird ein Bildverarbeitungssystem zur Diagnose des Verschmutzungsgrads verwendet, wie oben erwähnt, kann beispielsweise zunächst die Kamera einer Reinigung unterzogen werden und anschließend, zeigt die Diagnose weiterhin Verschmutzungen, auch der Außenbereich gereinigt werden.

Es ist außerdem aus den Zeichnungen ersichtlich, dass die Schutzabdeckung als einfach zugängliche Handhabe für die Öffnung der Heckklappe eingesetzt werden kann. Unterhalb der Schutzabdeckung ist auf der Unterseite ein Freiraum, in den ein Benutzer eingreifen kann. Alternativ kann die obere Hälfte der Schutzabdeckung eingedrückt werden, um die Klappe zu betätigen.

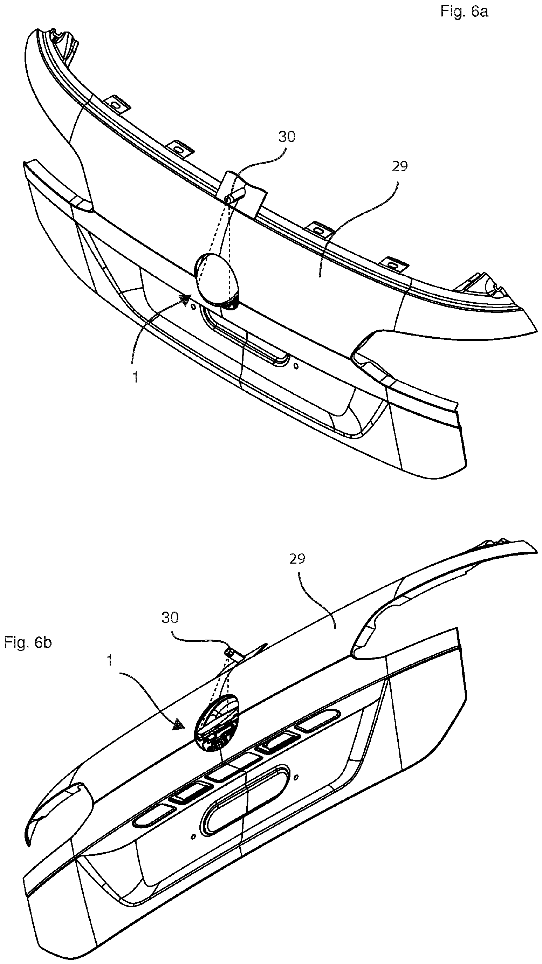

In Figur 6a ist eine zweite Ausführungsform der Erfindung gezeigt. In dieser Ausführungsform ist zusätzlich zu dem ersten Fluidausstoss hinter der Schutzabdeckung (hier nicht dargestellt) ein weiterer Fluidausstoss 30 vorgesehen. Die Kameraeinheit 1 ist ausgebildet wie in den oben beschriebenen Ausführungsformen, mit einem Fluidausstoss hinter der Schutzabdeckung. Die Kameraeinheit 1 ist in einen Karosserieabschnitt 29, der einen Teilabschnitt der Heckklappe bildet, eingesetzt. Die übrige Karosserie ist aus Gründen der Übersichtlichkeit nicht gezeigt. Der weitere Fluidausstoß 30 ist in diesem Ausführungsbeispiel mit der Heckscheibenreinigung integriert. Für die Reinigung der Heckscheibe verfügen Fahrzeuge über einen Fluidausstoss, welcher die Heckscheibe mit Reinigungsfluid benetzt und ein Wischblatt wird zur Reinigung über die benetzte Scheibe geführt. Der Fluidausstoss für die Heckscheibeneinrichtung kann insbesondere in dem Lager des Heckwischers integriert sein. Gemäß dem Ausführungsbeispiel ist zusätzlich zu dem Fluidausstoss in Richtung der Heckscheibe auch ein Fluidausstoss in Richtung der schwenkbaren Handhabe der Kameraeinheit 1 vorgesehen. Wie in den Figuren 6a, 6b gezeigt, ist die geschwenkte Handhabe für einen Fluidstrahl aus der Einrichtung 30 erreichbar, insbesondere im ausgeschwenkten Bereich, hier der unteren Hälfte der Schutzabdeckung. Der Fluidauslass 30 kann gleichzeitig mit einem Heckscheibenreinigungsvorgang aktiviert werden, er kann aber auch unabhängig von der Benetzung der Heckscheibe angesteuert werden. Diese Gestaltung ist insbesondere in der gezeigten Gestaltung mit schwenkbarer Schutzabdeckung vorteilhaft, da in der aufgeschwenkten Stellung die Schutzabdeckung und ein in der Schutzabdeckung angeordnetes Durchsichtfenster für die dahinter angeordnete Kamera für ein aus dem Fluidauslass 30 ausgestoßenes Fluid zugänglich sind. Der Fluidauslass kann insbesondere so gestaltet sein, dass er eine Fluiddüse zum Ausstoß in Richtung der Heckscheibe (also nach oben) aufweist und eine weitere Düse für den gezielten Ausstoß nach unten, auf die ausgeklappte Schutzabdeckung. Es ist jedoch auch möglich, dass dieselbe Düse in unterschiedliche Ausrichtungen (Heckscheibe und Schutzabdeckung) drehbar ist.

## Patentansprüche

1. Kameraeinheit (1) für ein Kraftfahrzeug, mit
einem Trägergehäuse, das in einem Durchbruch einer Außenverkleidung eines Fahrzeuges anzuordnen ist,
einer Antriebseinheit, die mit dem Trägergehäuse (2) verbunden ist,
einer bewegbar gelagerten Kamera, die in dem Trägergehäuse (2) aufgenommen und mit der Antriebseinheit (4) gekoppelt ist, um mittels der Antriebseinheit (4) gegenüber dem Trägergehäuse (2) zwischen mehreren Kamerastellungen bewegt zu werden,
einer an dem Trägergehäuse (2) gelagerten Schutzabdeckung, die gegenüber dem Trägergehäuse (2) zwischen mehreren Schutzabdeckungsstellungen bewegbar ist,
wobei dann, wenn die Kamera (15) sich in einer ersten Kamerastellung befindet, die Kamera (15) von der Schutzabdeckung (3) in einer ersten Schutzabdeckungsstellung bedeckt ist,
wobei dann, wenn die Kamera (15) sich in einer zweiten Kamerastellung befindet, die Kamera (15) von der Schutzabdeckung (3) in einer zweiten Schutzabdeckungsstellung wenigstens teilweise freigelegt ist,
wobei an dem Trägergehäuse (2) eine Fluidverteilungseinrichtung angeordnet ist, wobei die Fluidverteilungseinrichtung wenigstens einen Fluidauslass (16) zum Ausstoßen eines Fluides in Richtung der Kamera (15) aufweist, um ein Reinigungsfluid auf die Kamera (15) aufzubringen, wobei der Fluidauslass (16) zwischen Kamera (15) und Schutzabdeckung (3) in direkter Sichtlinie zu der Kamera (15) in der ersten Kamerastellung angeordnet ist,
**dadurch gekennzeichnet,**
**dass** die Fluidverteilungseinrichtung mehrere Fluidauslässe aufweist, die zum Ausstoß in verschiedene Richtungen orientiert sind und/oder zum Ausstoß unterschiedlicher Medien oder Substanzen ausgebildet sind.

2. Kameraeinheit nach Anspruch 1, wobei die Schutzabdeckung (3) wenigstens einen transparenten Bereich aufweist, so dass die Kamera (15) durch den transparenten Bereich der Schutzabdeckung (3) hindurch einen äußeren Sichtbereich erfasst.

3. Kameraeinheit nach Anspruch 2, wobei die Kamera (15) wenigstens eine dritte Kamerastellung einnehmen kann, in welcher die Kamera (15) im Vergleich zu der ersten Kamerastellung zu dem transparenten Bereich der Schutzabdeckung (3) angenähert ist.

4. Kameraeinheit nach Anspruch 2 oder 3, wobei die Fluidverteilungseinrichtung ausgebildet ist, um außerdem Fluid auch in Richtung der Innenseite der Schutzabdeckung, insbesondere auf den transparenten Bereich der Schutzabdeckung (3) auszustoßen.

5. Kameraeinheit nach einem der vorangehenden Ansprüche, wobei die Fluidverteilungseinrichtung zum Ausstoßen von Fluid in Form einer wässrigen Lösung oder von Druckluft oder einem Gemisch aus beidem ausgebildet ist.

6. Kameraeinheit nach einem der vorangehenden Ansprüche, wobei ein weiterer Fluidauslass (17) an dem Trägergehäuse (2) derart angeordnet ist, um Fluid auf die Außenseite der Schutzabdeckung, insbesondere auf einen transparenten Bereich der Schutzabdeckung, auszustoßen.

7. Kameraeinheit nach einem der vorangehenden Ansprüche, wobei die Schutzabdeckung (3) schwenkbar gegen das Trägergehäuse (2) ausgebildet ist.

8. Kameraeinheit nach Anspruch 7, wobei ein weiterer Fluidauslass (17) an dem Trägergehäuse (2) derart angeordnet ist, dass ein Fluidausstoß auf die Außenseite der Schutzabdeckung, insbesondere auf einen transparenten Bereich der Schutzabdeckung, erfolgt, wenn sich die Schutzabdeckung (3) in einer ausgeschwenkten Stellung befindet.

9. Kameraeinheit nach Anspruch 7, wobei ein weiterer Fluidauslass (30) separat von dem Trägergehäuse und beabstandet zu dem Trägergehäuse ausgebildet und mit einer Einrichtung zur Heckscheibenreinigung integriert ist, insbesondere einem Fluidsystem an einem Heckscheibenwischer eines Fahrzeugs.

10. Kameraeinheit nach einem der vorangehenden Ansprüche, wobei die Fluidverteilungseinrichtung derart mit Kopplungsmitteln ausgebildet ist, dass ein Fluidsystem einer fahrzeugseitigen Waschanlage ankoppelbar ist.

11. Kameraeinheit nach einem der vorangehenden Ansprüche, wobei die Schutzabdeckung (3) als Handhabe für eine Klappenbetätigung an einem Fahrzeug ausgebildet ist.

## Claims

1. A camera unit (1) for a motor vehicle with
a carrier housing to be arranged in an aperture of an outer panelling of a motor vehicle,
an actuator unit which is connected to the carrier housing (2),
a movably borne camera which is accommodated in the carrier housing (2) and connected to the actuator unit (4) in order to be moved by the actuator unit (4) relative to the carrier housing (2) between several camera positions,
a protective cover which is borne on the carrier housing (2) and is movable relative to the carrier housing (2) between several protective cover positions,
wherein when the camera (15) is in a first camera position the camera (15) is covered by the protective cover (3) in a first protective cover position,
wherein when the camera (15) is in a second camera position, the camera (15) is at least partially uncovered by the protective cover (3) in a second protective cover position,
wherein on the carrier housing (2) a fluid distribution device is arranged, wherein the fluid distribution device comprises at least one fluid outlet (16) for emitting a fluid in the direction of the camera (15) in order to apply a cleaning fluid to the camera (15), wherein the fluid outlet (16) is arranged between the camera (15) and protective cover (3) in the direct line of sight to the camera (15) in the first camera position,
**characterised in that**
the fluid distribution device comprises several fluid outlets which for emission are orientated in different directions and/or are configured for emitting different media or substances.

2. The camera unit according to claim 1, wherein the protective cover (3) has at least one transparent area so that the camera (15) records an external field of view through the transparent area of the protective cover (3).

3. The camera unit according to claim 2, wherein the camera (15) can assume at least one third camera position in which, in contrast to the first camera position, the camera (15) is brought closer to the transparent area of the protective cover (3).

4. The camera unit according to claim 2 or 3, wherein the fluid distribution device is configured to also emit fluid in the direction of the inner side of the protective cover, in particular to the transparent area of the protective cover (3).

5. The camera unit according to any one of the proceeding claims, wherein the fluid distribution device is configured to emit fluid in the form of an aqueous solution or compressed air or a mixture of both.

6. The camera unit according to any one of the preceding claims, wherein a further fluid outlet (17) is arranged on the carrier housing (2) in such a way as to emit fluid onto the outer side of the protective cover, in particular onto a transparent area of the protective cover.

7. The camera unit according to any one of the preceding claims, wherein the protective cover (3) is can be swivelled against the carrier housing (2).

8. The camera unit according to claim 7, wherein a further fluid outlet (17) is arranged on the carrier housing (2) in such a way that fluid emission takes place onto the outer side of the protective cover, in particular onto a transparent area of the protective cover when the protective cover (3) in a swivelled out position.

9. The camera unit according to claim 7, wherein a further fluid outlet (30) is provided which is separate from the carrier housing and at a distance from the carrier housing and is integrated with a device for rear window cleaning, in particular a fluid system on the rear window wiper of a motor vehicle.

10. The camera unit according to any one of the preceding claims, wherein the fluid distribution device is designed with connection means in such a way that a fluid system can be connected to a motor vehicle's washing system.

11. The camera unit according to any one of the preceding claims, wherein the protective cover (3) is configured as a handle for operating a tailgate on a vehicle.

## Revendications

1. Unité de caméra (1) destinée à un véhicule automobile, pourvue
d'un boîtier de support, qui doit être placé dans un ajour d'un habillage extérieur d'un véhicule,
d'une unité d'entraînement, qui est reliée avec le boîtier de support (2),
d'une caméra logée de manière mobile, qui est réceptionnée dans le boîtier de support (2) et qui est couplée sur l'unité d'entraînement (4) pour être déplacée à l'aide de l'unité d'entraînement (4) par rapport au boîtier de support (2) entre plusieurs positions de caméra,
d'un couvercle protecteur logé sur le boîtier de support (2), qui par rapport au boîtier de support (2) est mobile entre plusieurs positions de couvercle protecteur,
lorsque la caméra (15) se trouve dans une première position de caméra, la caméra (15) étant recouverte par le couvercle protecteur (3), dans une première position de couvercle protecteur,
lorsque la caméra (15) se trouve dans une deuxième position de caméra, la caméra (15) étant dégagée au moins partiellement par le couvercle protecteur (3), dans une deuxième position de couvercle protecteur,
sur le boîtier de support (2) étant placé un système distributeur de fluide, le système distributeur de fluide comportant au moins une sortie de fluide (16), pour l'expulsion d'un fluide en direction de la caméra (15), pour appliquer un fluide nettoyant sur la caméra (15), la sortie de fluide (16) étant placée entre la caméra (15) et le couvercle protecteur (3), en ligne de visée directe vers la caméra (15) dans la première position de caméra,
**caractérisée**
**en ce que** le système distributeur de fluide comporte plusieurs sorties de fluide qui sont orientées pour une expulsion dans différentes directions et/ou qui sont conçues pour une expulsion de différents agents ou substances.

2. Unité de caméra selon la revendication 1, le couvercle protecteur (3) comportant au moins une zone transparente, de sorte que la caméra (15) détecte une zone extérieure à travers la zone transparente du couvercle protecteur (3).

3. Unité de caméra selon la revendication 2, la caméra (15) pouvant adopter une troisième position de caméra dans laquelle, en comparaison de la première position de caméra, la caméra (15) est rapprochée de la zone transparente du couvercle protecteur (3).

4. Unité de caméra selon la revendication 2 ou 3, le système distributeur de fluide étant conçu pour expulser par ailleurs du fluide également en direction de la face intérieure du couvercle protecteur, notamment sur la zone transparente du couvercle protecteur (3).

5. Unité de caméra selon l'une quelconque des revendications précédentes, le système distributeur de fluide étant conçu pour expulser du fluide sous la forme d'une solution aqueuse ou d'air comprimé ou d'un mélange des deux.

6. Unité de caméra selon l'une quelconque des revendications précédentes, une sortie de fluide (17) supplémentaire étant placée sur le boîtier de support (2), de sorte à expulser du fluide sur la face extérieure du couvercle protecteur, notamment sur une zone transparente du couvercle protecteur.

7. Unité de caméra selon l'une quelconque des revendications précédentes, le couvercle protecteur (3) étant conçu de manière à pouvoir pivoter par rapport au boîtier de support (2).

8. Unité de caméra selon la revendication 7, une sortie de fluide (17) supplémentaire étant placée sur le boîtier de support (2), de sorte qu'il s'effectue une expulsion de fluide sur la face extérieure du couvercle protecteur, notamment sur une zone transparente du couvercle protecteur, lorsque le couvercle protecteur (3) se trouve dans une position déployée.

9. Unité de caméra selon la revendication 7, une sortie de fluide (30) supplémentaire étant conçue séparément du boîtier de support et avec un écart par rapport au boîtier de support et étant intégrée avec un système destiné à nettoyer la vitre arrière, notamment un système fluidique sur un essuie-glace arrière d'un véhicule.

10. Unité de caméra selon l'une quelconque des revendications précédentes, le système distributeur de fluide étant conçu avec des moyens de couplage, de sorte qu'un système fluidique d'un système de lavage situé sur le véhicule puisse être accouplé.

11. Unité de caméra selon l'une quelconque des revendications précédentes, le couvercle protecteur (3) étant conçu sous la forme d'une manette destinée à actionner un clapet sur un véhicule.
